Europäisches Patentamt

European Patent Office

Office européen des brevets

(19)

(11) EP 1 247 891 A2

## (12) EUROPEAN PATENT APPLICATION

(43) Date of publication:
09.10.2002 Bulletin 2002/41

(51) Int Cl.⁷: $D06N\ 7/00$, $C09D\ 195/00$

(21) Application number: 02252370.8

(22) Date of filing: 02.04.2002

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **05.04.2001 US 826456**<br><br>(71) Applicant: **Collins & Aikman Floorcoverings, Inc.**<br>**Dalton, Georgia 30722 (US)** | (72) Inventor: **Davies, Keith Barkway**<br>**Llantaman, Gwent NP3 3AF (GB)**<br><br>(74) Representative:<br>**Bankes, Stephen Charles Digby et al**<br>**BARON & WARREN**<br>**18 South End**<br>**Kensington**<br>**London W8 5BU (GB)** |

(54) **A carpet tile containing resin and bitumen processed at low temperatures**

(57)     A carpet tile (10) having a generally planar body (12) where the body has traffic surface (14), a back side and a back coating matrix (18) affixed to the back side. A portion of the back coating is formed from a bitumen matrix. The bitumen matrix comprises an amount of bitumen and a resin with a portion of the bitumen PEN grade bitumen. The matrix composition may be processed and applied to carpet at temperatures between 115°C and 155°C and is typically applied at temperatures of about 125°C.

Fig. 1

EP 1 247 891 A2

**Description**

The present invention relates generally to fibrous floor covering material, and more particularly to back coating for carpet tiles.

Carpet tiles typically include a generally planar body having a traffic surface or wear layer, a backside, and a back coating or floor contact layer. Other intermediate layers may also be included. Generally, carpet tiles are made of textile fibers normally composed of natural and or synthetic fiber materials including wool, cotton, nylon, acrylic, polypropylene or mixtures thereof. The textile fibers may be woven or tufted by any method of carpet manufacture known to one skilled in the art. After the weaving or tufting process, the unfinished carpet is precoated with a water based filled or unfilled latex or emulsion. The fibers are thus firmly anchored in a primary backing. The primary backing is generally a composition based on styrene butadiene rubbers ("SBR"), styrene acrylate ("SA") or ethylene vinyl acetate ("EVA"). After the fibers are firmly anchored in the primary backing, the carpet is ready for application of a back coating or mounting surface thereto. A back coating and a mounting surface are taken to mean the same portion of the carpet tile with the term back coating used herein.

Traditionally, back coating of carpet tile has been made from one of three different types of compositions. One composition includes water-based solutions or emulsions that are filled with mineral fillers. Upon application to the carpet tile, warm or hot air is used to remove water by evaporation and thereby dry the back coating.

The second composition for a back coating involves solvent-free compositions which arc liquids at ambient temperature. Such composition include, for example, polyvinyl chloride ("PVC"), plastisols, or solvent-free polyurethane. These compositions are highly filled, typically over 50% of the weight composition of the compound is filler and react by a two-part method where the composition reacts via a chemical reaction accelerated by heat.

The third type of composition includes compositions applied using hot melt application methods. These compositions are generally derived from polypropylene or bitumen.

The use of bitumen has two inherent problems, namely the inherent tendency of bitumen to adhere to and contaminate tools and energy costs associated with achieving and maintaining bitumen compositions at temperatures necessary for processing. Thus, there is a need for bitumen compositions which can be processed at lower temperatures and which have a reduced contamination property.

**Summary of the Invention**

The back coating composition of the present invention comprises a composition of bitumen and a substantially low molecular weight resin that has a viscosity such that it is pumpable at temperatures below 150°C. This permits the processing of the back coating composition and application to the carpet at temperatures below 150°C. Specifically, a typical processing temperature of the composition of the present invention is about 125° C.

The present invention provides a carpet tile having a generally planar body, including a traffic surface and a back coating. A portion of the back coating is formed from a matrix. The matrix comprises bitumen, and an amount of resin wherein the resin is effective in substantially preventing adherence of the bitumen to tile forming tools and allowing low temperatures to be used in processing.

The present invention provides a carpet tile having a generally planar body, including a traffic surface and a back coating. A portion of the back coating is formed from a matrix. The matrix comprises bitumen and an amount of resin wherein the resin also reduces the viscosity of the bitumen allowing lower processing temperatures. The resin being defined as a synthetic or naturally occurring polymer typically with a low molecular weight as compared polymers in general. The resin is selected from the group consisting of hydrocarbon resin manufactured from $C_5$ to $C_9$ hydrocarbon monomers, rosin esters, .polyterpene resin, coumarone-indene resin, cyclohexanone formaldehyde resin, phenolic resin, petroleum resin, phenol formaldehyde resin, and gilsonite derivatives.

Further, the present invention comprises a finished carpet tile manufactured using ordinary carpet-forming tools. The finished carpet tile has a generally planar body where the body has a traffic surface and a back coating. A portion of the back coating is formed from a matrix. The matrix comprises a binder portion and a filler portion. The binder portion comprises bitumen, a predetermined amount of resin, and a surfactant. The binder is combined with a predetermined amount of filler to create the matrix. The surfactant has a surfactant weight, the filler has a filler weight, the bitumen has a bitumen weight, and the resin has a resin weight. The total matrix weight comprises the bitumen weight, the resin weight, the filler weight, and the surfactant weight. In a typical example the surfactant may be a fatty acid amide such as the reaction product of the lauric acid and diethanolamine, the filler may be calcium carbonate and the resin a rosin ester or a hydrocarbon resin manufactured from $C_5$ to $C_9$ hydrocarbon monomers or a mixture of rosin ester and hydrocarbon resin. Further, in an exemplary embodiment, the bitumen weight is about 30% of the total weight; the resin weight is about 3% to about 5% of the total weight; the filler weight is about 62% to about 65.5% of the total weight, and the surfactant weight is about 1% to about 1.5% of the total weight.

The invention also provides a method for preparing resin modified bitumen for a back coating of a carpet tile.

The method comprises heating bitumen to a temperature between about 115°C and about 155°C, adding an amount of substantially low molecular weight resin to the bitumen to form a matrix wherein the resin is added in an amount effective to substantially lower the viscosity of the matrix, and applying the matrix to the backside of carpeting to for a back coating.

The matrix of the present invention may include a binding portion where the resin amount is up to about 80% by weight of the binding portion and where the resin has a melting point between about 65°C and about 150°C. Optionally, the matrix may include a binding portion where the resin amount is between about 5% and about 30% by weight of the binding portion and where the resin has a melting point between about 80°C and about 100°C. Further; the resin may have a molecular weight below about 5000. The matrix may also include PEN grade bitumen or a mixture of PEN grade and oxidized bitumen. PEN grades bitumens are obtained from fractional distillation of crude oil. The lightest fraction are vapours i.e. butane and propane, heavier fractions are taken off the column for gasoline production, then kerosene, then gas oil, the heaviest fraction are high molecular weight hydrocarbons. These heavy hydrocarbons, which are called long residue, are further distilled in a vacuum distillation column to produce gas oil, distillates and short residue. The short residue is the feed stock for producing over 20 grades of bitumen, these are classified by their penetration index typically PEN values of 100 to 300 dmm, this is the distance in millimetres that a needle penetrates the bitumen under a standard test method. Some crude oils, most notably South American, can be used to produce short residues of 50 dmm or even harder. The short residues may be further semi blown or fully blown with air to increase their molecular weight. This process creates oxidized grades of bitumen.

The matrix of the invention may further comprise a predetermined amount of filler the predetermined amount of filler may be between about 10 weight % and about 90 weight % by weight of the matrix and typically is about 60-70% by weight of the matrix.

The bitumen of the invention may have a penetration between about 5 PEN and about 300 PEN and a bitumen melting point between about 60°C and about 120°C. Typically, the bitumen has a penetration between about 15 PEN and about 30 PEN and a bitumen melting point between about 60°C and about 120°C.

The resin of the invention may include resin selected from the group consisting of rosin, ester gum, tall oil, esters of rosin, hydrogenated rosin, esters of hydrogenated rosin, reaction products from rosin and maleic anhydride, and reaction products from rosin and phenol. The esters of rosin may be formed from the reaction of rosin with alcohol, wherein the alcohol is selected from the group consisting of methyl alcohol, dipropylene glycol, glycerine, and pentaerythritol, or mixtures thereof

Alternatively, the resin of the invention may be a hydrocarbon resin manufactured from $C_5$ to $C_9$ hydrocarbon monomers or a mixture of hydrocarbon resin with a rosin resin.

The resin-modified bitumen compositions of the present invention may be processed at temperatures that result in significant cost savings over previous methods of manufacturing bitumen backed floor coverings. In addition, these compositions serve to reduce or eliminate the problems associated with the adhering of the backing material to tile-forming tools.

### Brief Description of the Drawings

Figure 1 is a cross-sectional view of a carpet tile having tufted carpet fiber in accordance with the present invention; and
Figure 2 is a cross-sectional view of a carpet tile having a woven traffic surface in accordance with the present invention.

### Detailed Description of the Preferred Embodiment

When forming a back coating for a floor covering using a hot melt approach, it is generally preferable to be able to process the back coating composition at as low a temperature as possible. The typical temperature range for using materials such as polypropylene is from about 120°C to about 200°C. By comparison, the range for bitumen compositions has typically been from about 150°C to about 180°C for bitumen compositions. Lower temperatures have not been possible for bitumen because the high viscosities of the bitumen compositions at temperatures below 150°C rendered them unpumpable. The lower processing temperatures that can be used with polypropylene compositions would thus appear to make such compositions a more attractive option than bitumen. However, the high cost of atactic polypropylene has made the use of polypropylene less attractive in recent years. On a cost basis, the hot melt method using bitumen is therefore highly competitive with the previously mentioned compositions and methods for forming the back coating of carpet types.

The use of bitumen, however, has inherent problems. These problems include the inherent tendency of bitumen to adhere to and contaminate tile forming tools and, as noted above, the higher cost associated with maintaining the composition at higher temperatures.

As used herein, "tile forming tools" or "carpet forming tools" refer to the tools used in the industry to cut or size the carpet to a final size after the back coating has been applied to the carpet. Tile forming tools or carpet forming tools include but are not limited to metallic cutting tools, cutting tool blades, knives, presses, die stamping cutting tools such as a Pieper die cutting tool fitted to a cutting press, and other tools known to one skilled in the art for forming, cutting, or sizing carpet tiles after the back coating has been applied to the carpet.

Unmodified bitumen compounds can transfer from the back coating of the carpet tile to tile forming tools. The transfer of bitumen to tile forming tools and retention thereby, produces sticky deposits on the tool resulting in frequent and time consuming cleaning of the tools. If the cutting tool is not clean, the bitumen contaminant can be transferred to the fibers of the carpet, which results in tiles with visible lines across the grid pattern when the tiles are laid. Additionally, soft bitumen compositions can produce marks on skirting boards and walls and can also contaminate knives used by carpet contractors when installing carpet tiles.

To address this problem, harder grades of bitumen or lower penetration grades of bitumen could be used to minimize bitumen transfer. However, compositions that have harder grades of bitumen or lower penetration grades of bitumen have high viscosities and therefore require higher temperatures to process. High viscosity makes handling and application difficult and higher processing temperatures result in even higher energy costs.

As an alternative, some companies have developed polymer modified bitumen systems. Generally, bitumen has been modified with high molecular weight block polymers like styrene-butadiene-styrene, styrene-isoprene-styrene, ethylene vinyl acetate or other similar polymers. Small percentages of polymer, about 5-10%, are normally used with the polymer modified bitumen systems. The lower amount of bitumen in the back coating reduces bitumen contamination problems. Such polymer modified bitumen systems, however, suffer from the use of higher cost compounds and the requirement of specialized mixing equipment for dispersing the high molecular weight polymers into the bitumen. Further, due to the very high melt viscosity of these high molecular weight polymers, oxidized bitumen cannot be used because the combined viscosity would render the composition unusable at normal application temperatures of about 150°C-180°C.

Even the normal bitumen processing temperature range is expensive because facilities that make carpet tiles typically operate continuously, and tremendous amounts of energy are consumed in maintaining processing temperatures. Thus, a reduction of processing temperature by even a few degrees would reduce energy cost and lessen environmental impact. Additionally, a lower processing temperature would permit the application of a bitumen backcoating to floor coverings having secondary backing tissues of the spun bonded polypropylene type. Such secondary backing materials have an inherent heat sensitivity above 125°C and thus are not sufficiently stable for use in floor coverings that are manufactured using processing temperatures of 150°C-180°C.

Accordingly, a bitumen composition that has sufficient viscosity to be pumped at a temperature below 150°C while producing a minimum of bitumen transfer and contamination during cutting is highly desirable.

Another important benefit of the low temperature resin modified system is that the described compound has unlimited pot life, it is stable as a hot liquid compound and does not suffer from increase in viscosity over a period of time. Batch processing can be done, manufacturing in bulk tanks without any fear of chemical reaction within the compound. Two part bitumen compounds, such as bitumen diisocyanate compounds for example, have a given pot life or usable viscosity after the addition of the second component which is generally a reactive chemical composition i.e., diisocyanates reaction with hydroxyl groups. The addition of the second component may be done as a batch with a limited pot life or by special mixing equipment just prior to application. Two component bitumen compounds can be complicated and expensive both in material and equipment costs compared to the described single component system.

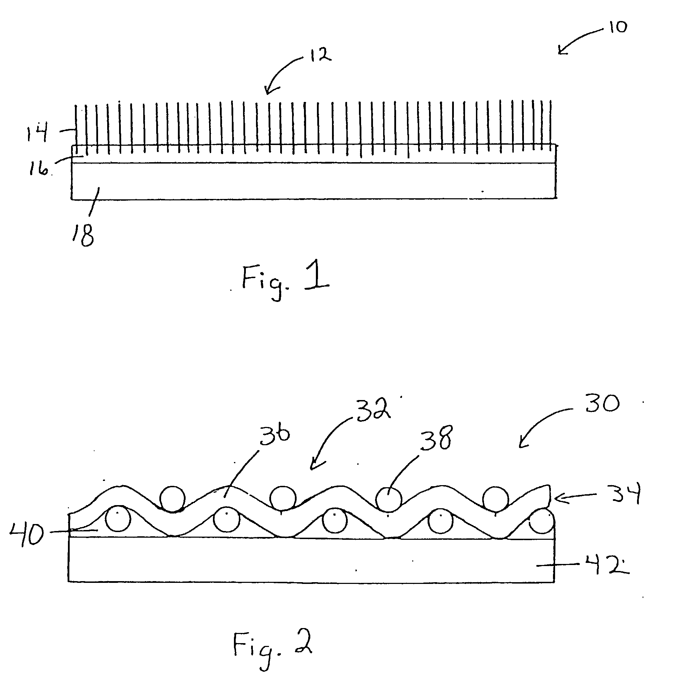

The present invention is directed to a carpet tile that uses a bitumen mixture in combination with resin to form a resin modified bitumen matrix to use in forming at least a portion of the back coating of the carpet tile. The resin modified bitumen matrix has a viscosity compatible with processing at temperatures below about 150°C and typically at about 125°C. Referring to the drawings and more particularly to Figure 1, a carpet tile according to an exemplary embodiment of the present invention is illustrated generally at **10.** The carpet tile **10** has a generally planar body **12.** The body **12** is provided with a tufted traffic surface **14** that is firmly anchored in a primary backing **16.** A back coating or secondary backing **18** is attached to the primary backing **16**, opposite the tufted traffic surface **14**. At least a portion of the back coating **18** is formed from a resin modified bitumen matrix where the matrix includes bitumen and resin. The matrix will subsequently be described in detail.

Referring to Fig. 2, a woven carpet tile according to an exemplary embodiment of the present invention is illustrated generally at **30**. The woven carpet tile **30** has a generally planar body **32**. The body **32** is provided with a woven traffic surface **34** having warp yarns **36** and weft yarns **38**. The woven traffic surface **34** is backed by a resin composition layer **40**. A back coating **42** is attached to the resin composition layer **40** opposite the woven traffic surface **34**. At least a portion of the back coating **42** is formed from a resin modified bitumen matrix.

The resin modified bitumen matrix that comprises at least a portion of the above-described back coatings 18, 42 includes a binder portion and a filler portion. The binder portion is made up of bitumen, resin and, preferably, a surfactant. In general, bitumen is available in PEN standard, oxidized, or hardened grades. Oxidized bitumen, which is traditionally used in carpet tile manufacture, is characterized as rubber like. All oxidized bitumen products are referenced by the petroleum industry as "R" grades, signifying rubber like properties. Oxidized bitumen products, unlike hard bitumen products, are difficult to cut. Cutting properties may be improved by adding harder or higher melting point grades of oxidized bitumen. However, the use of higher melting point grades of oxidized bitumen leads to problems of high viscosity and unusable viscosity profiles at normal processing temperatures, which are typically around 150°C-180°C. The high viscosity at normal processing temperatures requires the use of higher temperatures for processing (i.e., temperatures above 180°C). Even at higher temperatures, a reduction in the amount of filler used may be required to maintain suitable viscosity. Reduction in filler impacts the properties of the final product and cost.

In the present invention, the viscosity of the matrix is lowered by using a combination of resin and a PEN grade bitumen or a combination of resin, oxidized bitumen and PEN grade bitumen. Both the resin and the PEN grade bitumen lower the viscosity. Additionally, resin increases the hardness of the matrix in the finished product. The lowering of viscosity permits processing at temperatures below 150°C and typically at temperatures of about 120°C to about 125°C. Thus, less energy is required during processing to maintain the matrix at a suitable viscosity for application.

PEN grade bitumen, mixtures of selected blends of bitumen grades or mixtures of PEN and oxidized bitumen may be used in the practice of the invention. The PEN grade bitumen used in this invention may have a penetration between about 5 PEN and about 300 PEN as defined in the petroleum industry. Typically, bitumen having a PEN value between about 15 to about 30 and a melting point of between about 60°C and about 120°C may be used. The use of PEN grade bitumen as the sole bitumen component can achieve the processing goals of the invention (i.e., such a composition can be processed at temperatures below 150°C). The resulting back coating, however, would be brittle and likely to suffer from creep problems and would require careful temperature control during storage and transfer. A combination of PEN grade and oxidized bitumen, however, can be used to produce a less brittle structure and can be processed at a lower temperature than could oxidized bitumen alone.

Accordingly, in an exemplary embodiment of the invention, a mixture of PEN grade and oxidized bitumen is used to achieve the processing goals of the present invention while imparting the desired structural properties to the finished product. For example, matrixes according to the present invention can be formed wherein the total weight of bitumen is about 30% of the total matrix weight.

The resin of the binder portion of an exemplary embodiment of the matrix is a resin that is low in molecular weight. As used herein "substantially low mofecular weight resin" refers to a resin that is a polymeric material which has molecular weight generally below 7,500 g/mol, preferably below 5000 g/mol, when added to, mixed with, and solidified with the bitumen to form the back coating of a carpet tile.

The effect of addition of such low molecular weight resins to the binder is to further reduce the viscosity of the bitumen composition. This allows the use of higher percentages of filler while continuing to allow processing at temperatures below 150°C. Additionally, as discussed below, the use of such resins also serves to minimize the adherence of the bitumen composition to tooling.

In one exemplary embodiment, rosin is the low molecular weight resin. Rosin is a natural resinous material derived from vegetation. The principal chemical structure in the composition is either abietic acid or pimaric acid depending on the source of the product. The rosin used in the present invention may be hydrogenated, esters of hydrogenated rosin, or combinations thereof or other forms of reacted rosin. Typically, the rosin is used as an esterified resin. The esters of rosin are reaction products of rosin with mono-, di-, tri-, tetra-, polyfunctional alcohols, or combinations thereof. Suitable reaction partners include, but are not limited to, methyl alcohol, dipropylene glycol, glycerine, pentaerythritol, and combinations thereof. In another exemplary embodiment the rosin acid is reacted with alcohol to produce what is commonly known as ester gum. Additionally, liquid rosin, commonly known as tall oil or tallol, may also be used to produce rosin esters for use as resins in accordance with the present invention. Reaction products of rosin with malcic anhydride or rosin and phenol may also be used in this invention.

In another exemplary embodiment, the non-polymeric resin is derived from hydrocarbon resin manufactured from $C_5$ to $C_9$ hydrocarbon monomers or a mixture thereof. For example, ISCAREZ HCR 102 available from ISCA UK Ltd. North Blackvein Industrial Estate, Wattsville, Crosskeys, Newport, Gwent, United Kingdom may be used. In some embodiments, a mixture of rosin and hydrocarbon resin may be used. Cost and availability of materials are typically significant factors in selection of the specific resin composition.

Alternatively, polyterpene resins derived from distillation of conifers, petroleum resins, and those resins derived from various hydrocarbons including coumarone-indene resins. Cyclohexanone formaldehyde resins, phenolic resins and Gilsonite resins may be used in the practice of the invention.

Generally, suitable resins are crystalline by nature and are normally in solid form at room temperature with a melting point between about 65°C and about 150°C, and typically between about 80°C and about 100°C. These properties allow the resin to be handled at room temperature without blocking and re-solidification in a warm environment.

The matrix of the present invention may contain resin in an amount of up to about 80% by weight of the binding portion of the matrix. Typically, the resin is between about 5% and about 30% by weight of the binding portion.

Optionally, surfactants may be included in the binder portion of the matrix for a variety of purposes including wetting the filler, managing the melting point of the matrix, or controlling antistatic performance of the carpet tile product. The surfactant allows efficient dispersion of the filler in the matrix. Useful surfactants include glycerol monostearate; ethoxylates; glycolates; sulphonates; a fatty acid amide, such as the reaction product of lauric acid and diethanolamine; LANKROSTAT 104 commercially available from AKCROS Chemicals Ltd., Bentcliffe Way, Eccles, Manchester, United Kingdom, and ISCASTAT 66 available from ISCA UK Ltd. North Blackvein Industrial Estate, Wattsville, Crosskeys, Newport, Gwent, United Kingdom. LANKROSTAT is a registered trademark of Harcros Chemicals UK Limited.

Typically, the surfactant has a melting point above about 40°C. In an exemplary embodiment, the surfactant has a melting point above about 60°C. One factor determining the choice of surfactant is the climate of the place of use of the carpet tile. The warmer the climate, the higher the melting point of the surfactant needs to be in order to prevent creep or edge melt of the matrix from the sides of the tile. Creep is a phenomenon that occurs when tiles are exposed to high ambient temperatures and is characterized by the exuding of matrix from the edges of the tile.

Filler is added to the matrix to enhance any of a variety of desired properties, including but not limited to flame retardancy, rheology and cost optimisation. Suitable types of fillers include but are not limited to, calcium carbonate (limestone), silicates, silica, oxides of silica, carbonates, sulphates, oxides of antimony, aluminium trihydrate, flourates, chlorates, borates, and phosphates, as well as other types of fillers known to one skilled in the art. The particle size of the fillers may range between about 0.01 micron and about 1.00 millimeter in size and may be segregated or classified to produce a desired mean size.

The filler content in the present invention is at a level of between about 10% and about 90% by weight based on the total composition weight of the resin modified bitumen matrix. The filler levels in the resin modified bitumen systems are normally extremely high, preferably on the order of about 60% to about 80% by weight of the resin modified bitumen matrix. For comparison, polymer modified bitumen systems are normally at the most about 50% to about 60% filler by weight. This high filler loading for the resin modified bitumen matrix has a drying effect on the binder portion of the matrix. However, the filler drying effect alone does not overcome the elimination of bitumen contamination. The addition of the resin is the driving force in eliminating bitumen contamination; the addition of filler to the matrix reduces the cost in manufacturing the tile.

Factors considered in determining filler loading include the fact that exceeding the maximum filler loading will result in a matrix that is too viscous. Additionally, excessive filler will result in bitumen film cracking and flaking on bending or flexing. Alternatively, lowering the filler loading will result in a drop in viscosity but the cost increases accordingly.

Additionally, natural and synthetic waxes may optionally be added to the resin modified bitumen matrix and can be useful in reducing the viscosity and allowing for an increase in the filler content. These waxes include, but are not limited to, hydrocarbons derived from the distillation of petroleum, paraffin wax and microcrystaline waxes with melting points ranging from about 45°C to about 120°C. Natural waxes of the candelilla and carnauba type are also useful.

Other additives such as pigments, plasticisers, and other high molecular weight polymers, including polymers and copolymers of ethylene, propylene, styrene, vinyl acetate, butadiene and generic rubber elastomers, may also be added in low proportions to the matrix in various exemplary embodiments of the invention.

The matrix is prepared by mixing the components in a heated vessel. A mixture of PEN grade and oxidised bitumen is pumped into a heated jacketed vessel at a temperature of between about 115°C and about 155°C. In an exemplary embodiment the temperature is about 125°C. The resin in solid form is added and dissolved in the hot bitumen. Both the PEN grade bitumen and the resin contribute to decrease in viscosity of the bitumen mixture which permits processing in the range of 115°C-155°C. Optionally a surfactant and/or wax may be added and dissolved in the hot bitumen or bitumen-resin mixture. This forms the binder portion of the matrix.

The hot binder portion of the matrix is combined with the filler. The filler has a cooling or quench effect on the matrix due to the filler being at ambient temperature. The filler reduces the hot matrix temperature by approximately 20°C-30°C. The temperature quenching effect increases the viscosity. Thus, the composition of the binder portion of the matrix should be such that the viscosity remains in a range such that the matrix can be pumped following the temperature quench of the addition of the filler.

The filler is added and mixed until a smooth and well-dispersed matrix is obtained. To accomplish mixing, the matrix is stirred at low speeds of about one hundred revolutions per minute or less. The hot matrix is then ready for pumping to a carpet coating apparatus.

Bitumen backed carpet tiles are typically manufactured by first applying a primary backing to the tufted fibers or a resin composition layer to woven textile fibers. The resin-modified bitumen matrix is typically applied as a back coating to the primary backing or resin composition layer. The matrix may be applied between about 500 grams per square meter and about 5000 grams per square meter. The matrix is typically applied at about 3000 grams per square meter. Optionally, the matrix may be applied directly to the carpet, to a carrier tissue, or to a conveyor belt on which the carpet is laid. In the application process, a dimensional stabilizing tissue may be used which may be nonwoven glass tissue or other specified material. The aim is to stabilize movement of the bitumen. For example, this can be done by applying one coat, then placing the stabilizing tissue on the hot wet bitumen and then apply a second coat of bitumen. Alternatively, one coat of bitumen may be applied over a secondary backing which is carrying the stabilizing tissue. The bitumen, upon application, penetrates the stabilizing tissue and sits on the top of the secondary backing. Carpet is placed on top of the hot bitumen layer and the product is fed through a nip roller. The composition is cooled and then cut either online or with stand-alone presses and made into carpet tiles.

The use of a matrix of resin and bitumen has many advantages over straight bitumen-limestone, or polymer-modified bitumen in carpet tile manufacturing in addition to low temperature processing. Unlike polymer modified bitumen, the resin modified bitumen method reduces the viscosity of the binder and hardens the composition at the same time. The resins, due to their crystalinity, are hard, brittle and have a very low tensile strength at room temperature. These properties of the resin aid in carpet tile cutting when the shear action of the blades takes place.

Accordingly, the present invention substantially eliminates contamination of cutting blades with bitumen and results in no substantial transfer of unwanted black bitumen to the edges of the tile. Carpet tile production can run continuously without stopping to clean cutting tools. The tiles may be cut through the face or through the back of the carpet. The cutting edge of the carpet tile remains sharp, straight, and clean. The abutment of tile edges results in carpet tiles that have an excellent broadloom appearance. No visible seam can be seen when tiles are laid together in the normal fashion.

Additionally, the resin modified compositions of the present invention do not exhibit the problem of phase layering, which can be a major problem in some polymer modified bitumen types. Constant heat in polymer modified bitumen type compounds can lead to phase separation and polymeric depolymerization. The bitumen matrix of the present invention does not suffer from thermal depolymerization, unwanted side reactions or phase separation as do the polymer modified bitumen systems. The present hot bitumen matrixes or compositions are thermally stable, maintain a physically steady state and do not suffer from phase separation or thermal degradation.

Further, the present bitumen matrixes do not require special high speed or high shear mixers as are required in the formulation of polymer modified bitumen compositions. This permits use of the same manufacturing equipment for bitumen matrixes that is used for manufacturing straight bitumen-limestone compounds and eliminates the need for costly expenditures for specialized manufacturing equipment. Further, since the present invention is stable over time, no limit is placed on holding a batch of resin modified bitumen over several weeks of continual heating. Further, carpet tiles produced from resin modified bitumen typically do not suffer from edge melt or creep problems.

Resin modified bitumen has better filler acceptance than polymer modified bitumen systems. Filler levels may be increased to higher percentages than were previously realized in polymer modified bitumen system. The level of filler has an important effect on lowering the cost of the bitumen back coating. Further, when the filler is combined with resin bitumen in the matrix, the combination has an effect of lowering the inherent property of bitumen to mark surfaces or transfer to other objects such as cutting tools and cutting die tool knives. When a knife cuts through the bitumen layer, the knife collects deposits of bitumen from the backing or back coating. This is due to the rubbery or viscoelastic nature of oxidized bitumen. When the knife is contaminated, the bitumen builds up on the knife and transfers bitumen to the edge of the carpet tile and results in contamination. This results in carpet tiles that have a thin film of bitumen present on the edges, resulting in the appearance of a checkerboard rather than a broadloom appearance.

Carpet tiles using the present resin-modified bitumen compositions leave tile-forming tools substantially free from bitumen contamination. The resultant carpet tiles are superior to bitumen-only and polymer modified bitumen systems. Uncomplicated mixing equipment may be used with resin modified bitumen systems, which makes it more economical to manufacture bitumen carpet backing systems. The method and composition of manufacture of a matrix disclosed herein for use at least in part as a back coating for carpet tile manufacture has many advantages over traditional and polymer modified bitumen systems.

The following examples are provided to illustrate the present invention and should not be construed as limiting thereof.

Example 1

A tufted carpet is manufactured by tufting nylon yarn at a density of tufting weight of between 800 grams -1500 grams per square meter through a primary backing. The primary backing is normally between 80 grams to 150 grams per square meter and made from spun bonded polyester. The carpet is then precoated with a suitable emulsion or latex compound in order to anchor the tufts in place. This is the normal method for producing tufted carpets. In roll form, the carpet is passed through a hot coating bitumen application line. The hot resin modified bitumen matrix may be applied directly to a backing tissue or conveyor belt with the carpet then placed onto the hot coating. The incorporation of stabilizing unwoven glass tissue; glass crinett, may also be used to stabilize the finished carpet tile from dimensional changes through the effect of temperature variances and humidity variances. Alternatively, the hot matrix may be applied to the back surface of the carpet. The hot bitumen composition is typically applied at the rate of 3000 grams per square meter to the carpet or carrier tissue.

Typically, hot resin modified bitumen matrix at a temperature of about 125°C is pumped onto a moving conveyor via a rolling bank with the tissue or carpet under surface running under the hot composition. The resin modified bitumen matrix; carpet, tissue and stabilising scrim are then pressed together using a nip roller. The carpet, with the multilayers in place, passes along a cooling platen or plates until the carpet reaches room temperature. When the carpet is around ambient temperature, the roll of carpet may be cut on line or planked off and cut through stand-alone presses.

In an exemplary embodiment of Example 1, a low temperature matrix comprised:

|  | Percent by Weight |
| --- | --- |
| Oxidized bitumen | 15.00% |
| Pen grade bitumen | 15.00% |
| Pentaerythritol rosin ester | 3.00% |
| Fatty acid amide | 1.50% |
| Limestone (calcium carbonate) | 65.50% |
| TOTAL | 100.00% |

The oxidized bitumen grade was R95/25 and had a melting point of 95°C and a PEN penetration index of 25. The PEN grade bitumen was a standard PEN 15 grade bitumen with a melting point of 60°C. The pentaerythritol rosin ester had a melting point of 100°C with an acid value of four. The fatty acid amide was LANKROSTAT 104.

The molten bitumen backing had a viscosity of about 30,000 to 60,000 centi poises at 125°C, which is the temperature at which the composition was applied. The composition had a density of 1.7 grams per cubic centimeter and a penetration hardness that is lower than 7 millimeters. In the finished product, hardness of the composition is greatly increased compared to the original hardness of the raw bitumen but the flexibility of the carpet tile is sufficient to flex during normal manufacture and fitting.

The molten bitumen backing material was applied to the backside of carpet. The carpet was cut into tiles. Tiles produced from this composition were cut by a normal press method or by a rotary cutting method, and the result is the steel blades or rotors, even after prolonged running, were substantially free from bitumen contamination. No substantial amount of bitumen was transferred to the carpet tile. Thus, the edge of the tile remained sharp, straight and clean permitting, an excellent fit and appearance when in abutment with an adjacent tile.

Example 2

In another exemplary embodiment of the invention, the low temperature matrix comprised:

|  | Percent by Weight |
| --- | --- |
| Oxidized bitumen | 15.00% |
| Pen Grade Bitumen | 15.00% |
| Pentaerythritol rosin ester | 3.00% |
| Fatty acid amide | 1.50% |
| Limestone (calcium carbonate) | 65.50% |
| TOTAL | 100.00% |

In the exemplary embodiment of Example 2, oxidized bitumen grade was R95/15 and had a melting point of 95°C and a PEN penetration index of 15. The PEN grade of bitumen had a penetration value of 15 and was a standard PEN 15 grade bitumen with a melting pint of 60°C. The pentaerythritol rosin ester had a melting point of 100°C with an acid value of four. The fatty acid amide was LANKROSTAT 104.

The molten bitumen matrix had a viscosity of about 30,000 to 60,000 centi poises at 125°C, which is the temperature at which the composition was applied. The composition had a density of 1.7 grams per cubic centimeter at 20°C and a penetration hardness that was lower than 7 millimeters at 20°C.

The molten bitumen backing material was applied to the backside of carpet. The carpet was cut into tiles. Tiles produced from this matrix were cut by a normal press method with a heated die or by a rotary cutting method, and the steel blade or rotors, even after prolonged running, were substantially free from any contamination of bitumen. No substantial amount of bitumen was transferred to the carpet tile. Thus, the edges of the tile remained sharp, straight and clean permitting an excellent fit and appearance when in abutment with an adjacent tile. Further, the hardness of the composition in the finished product was greatly increased compared to the original hardness of the raw bitumen and flexibility of the carpet tile was sufficient to flex during normal manufacture and fitting.

Example 3

In another exemplary embodiment of the invention, the low temperature matrix comprised:

|  | Percent by Weight |
| --- | --- |
| Oxidized bitumen | 15.00% |
| Pen grade bitumen | 15.00% |
| Hydrocarbon Resin | 3.00% |
| Fatty acid ester | 1.50% |
| Limestone (calcium carbonate) | 65.50% |
| TOTAL | 100.00% |

In the exemplary embodiment of Example 3, the oxidized bitumen grade was R95/25 and had a melting point of 95°C and a penetration value of 25. The PEN grade of bitumen had a penetration value of 15 and a melting point of 60°C. The resin was a hydrocarbon resin manufactured from $C_5$ to $C_9$ hydrocarbon monomers. The fatty acid ester was ISCASTAT AS66, ISCA UK Ltd. North Blackvein Industrial Estate, Wattsville, Crosskeys, Newport, Gwent, United Kingdom and has a melting point of 66°C. The 125°C molten resin modified bitumen matrix had a viscosity of about 30,000 to 60,000 centi poises. The matrix had a density of 1.7 grams per cubic centimeter at 20°C and a penetration hardness that was lower than 7 millimeters at 20°C. The hardness of the matrix in the finished product was greatly increased compared to the original hardness of the raw bitumen, but the matrix had sufficient flexibility to flex during normal manufacture and fitting.
The bitumen matrix was applied and tiles formed as described in Examples 1 and 2.

Example 4

In another exemplary embodiment of this invention, the low temperature matrix comprised:

|  | Percent by weight |
| --- | --- |
| Oxidised Bitumen | 12.5% |
| Pen Grade Bitumen | 18.7% |
| Hydrocarbon Resin | 4.7% |
| Surfactant | 1.6% |
| Limestone (calcium carbonate) | 62.5% |
| TOTAL | 100.00% |

In the exemplary embodiment of Example 4, the oxidized bitumen was R95/25 with a penetration value of 25, the PEN grade bitumen had a penetration value of 15, the resin was a hydrocarbon resin manufactured from $C_5$ to $C_9$ hydrocarbon monomers, and the fatty acid ester was ISCASTAT AS66 ISCA UK Ltd. North Blackvein Industrial Estate, Wattsville, Crosskeys, Newport, Gwent, United Kingdom. The 120°C molten resin modified bitumen matrix had viscosity of about 38,500 centi poises. The matrix had a specific gravity of 1.54. The bitumen matrix was applied to the backside of carpet. The carpet was cut into tiles.
Tiles produced from this composition were cut on a normal press, with or without the heated die or by a rotary cutting method, and the steel blade or rotors, even after prolonged running, were substantially free from bitumen contamination and. No substantial amount of bitumen was transferred to the carpet tile. Thus, the edge of the tile remained sharp and straight and substantially free from bitumen contamination. Accordingly, an excellent fit and appearance is achieved when tiles are in abutment.

**Claims**

1. A carpet tile (10, 30) comprising:

a generally planar body (12, 32) having a traffic surface (14, 34), a back side and a back coating (18, 42) affixed to the back side, the back coating having at least a portion thereof formed from a back coating matrix, the back coating matrix comprising an amount of bitumen and an amount of a substantially low molecular weight resin, wherein a portion of the amount of bitumen is a PEN grade bitumen; and wherein the back coating matrix has a spreadable, substantially liquid form at 125°C.

2. A carpet tile (10, 30) comprising:

a generally planar body (12, 32) having a traffic surface (14, 34), a back side and a back coating (18, 42) affixed to the backside, the back coating having at least a portion thereof formed from a back coating matrix, the back coating matrix comprising an amount of bitumen and an amount of a substantially low molecular weight resin, wherein a portion of the amount of bitumen is a PEN grade bitumen; and wherein the amount of bitumen has a penetration value between 15 PEN and 30 PEN and a melting point between 60°C and 120°C.

3. A carpet tile according to claim 1 or claim 2 wherein the amount of bitumen comprises a mixture of PEN grade and oxidised bitumen.

4. A carpet tile (10, 32) comprising:

a generally planar body (12, 32) having a traffic surface (14, 34), a back side and a back coating (18, 42) affixed to the back side, the back coating having at least a portion thereof formed from a back coating matrix, the back coating matrix comprising an amount of bitumen and an amount of a substantially low molecular weight resin, wherein a portion of the amount of bitumen is a PEN grade bitumen and wherein the back coating matrix has a viscosity of 30 to 60 Pas at 125°C.

5. A carpet tile according to any preceding claim wherein the amount of bitumen comprises a bitumen having a penetration value between 5 PEN and 300 PEN and a melting point between 60°C and 120°C.

6. A carpet tile according to any preceding claim wherein the amount of bitumen comprises a mixture of PEN grade and oxidised bitumen having a penetration value between 5 PEN and 300 PEN and a melting point between 60°C and 120°C.

7. A carpet tile according to any one of claims 2 to 6 wherein the back coating matrix has a spreadable, substantially liquid form at 125°C.

8. A carpet tile according to any preceding claim wherein the substantially low molecular weight resin includes an amount of up to 5% of the back coating matrix, and wherein the resin has a melting point between 65°C and 150°C.

9. A carpet tile according to any preceding claim wherein the substantially low molecular weight resin comprises at least one of a hydrocarbon resin and a rosin.

10. A carpet tile according to claim 9 wherein the rosin is selected from ester gum, tall oil, esters of rosin, hydrogenated rosin, esters of hydrogenated rosin, reaction products of rosin and maleic anhydride, reaction products of rosin and phenol and mixtures thereof.

11. A carpet tile according to any preceding claim further comprising a predetermined amount of filler, wherein the predetermined amount of filler is from 10% to 80% by weight of the back coating matrix.

12. A finished carpet tile (10, 30) comprising:

a generally planar body (12, 32) having a traffic surface (14, 34), a back side and a back coating (18, 42) affixed to the back side, the back coating having at least a portion thereof formed from a back coating matrix, the back coating matrix having a total weight and comprising an amount of bitumen having a bitumen weight, an amount of a substantially low molecular weight resin having a resin weight, a predetermined amount of filler having a filler weight, and a surfactant having a surfactant weight, wherein the bitumen is a mixture of PEN grade and oxidised bitumen, the substantially low molecular weight resin comprises at least one of a hydrocarbon resin or a rosin, the filler is calcium carbonate and the surfactant is a non-ionic surfactant; wherein the bitumen weight is about 30% of the total weight, the resin weight is about 3% of the total weight, the filler weight is about 65.5% of the total weight and the surfactant weight is about 1.5% of the total weight, and wherein the back coating matrix has a spreadable, substantially liquid form at 125°C.

13. A method for preparing resin modified bitumen for a back coating of a carpet tile comprising the steps of:

heating a mixture of PEN grade and oxidised bitumen between 115°C and 155°C;
adding an amount of substantially low molecular weight resin to the mixture of PEN grade and oxidised bitumen to form a back coating matrix;
affixing the back coating matrix to a back surface of a carpet roll; and
cutting the carpet roll to form a plurality of carpet tiles.

14. A method according to claim 13 wherein the mixture of PEN grade and oxidised bitumen has a penetration value between 5 PEN and 300 PEN and a melting point between 60°C and 120°C.

15. A method according to claim 14 wherein the mixture of PEN grade and oxidised bitumen has a penetration value between 15 PEN and 30 PEN.

16. A method according to any one of claims 13 to 15 wherein the substantially low molecular weight resin includes an amount of up to 5% of the back coating matrix and wherein the resin has a melting point between 65°C and 150°C.

17. A method according to any one of claims 13 to 16 wherein the substantially low molecular weight resin comprises a hydrocarbon resin and/or a rosin.

Fig. 1

Fig. 2